# EUROPEAN PATENT APPLICATION

(11) **EP 4 668 113 A1**
(43) Date of publication of application: **24.12.2025**
(21) Application number: 24209198.1
(22) Date of filing: 28.10.2024
(51) Int. Cl.: G06F 9/50, G06Q 10/0631, G05B 19/418

(54) **A DEVICE MANAGEMENT ENGINE**

(30) Priority: 20.06.2024 EP 24386073
(71) Applicant: ARM Limited, Cambridge CB1 9NJ (GB)
(72) Inventor: POTTIER, Remy, Cambridge, CB1 9NJ (GB); COOK, Nicholas John, Cambridge, CB1 9NJ (GB); SOUBRA, Diya, Cambridge, CB1 9NJ (GB)
(74) Representative: TLIP Limited

(57) **Abstract**

A device management engine comprising a transceiver element operable to communicate with machines over a network fabric of an ambient computing environment; and an intelligent machine learning element operable to: responsive to a scenario prompt, define an overall objective comprising one or more physical subtasks; determine available agent devices in the ambient computing environment; determine capabilities of the available agent devices; identify available capable agent devices configurable to perform at least one of the one or more physical subtasks; and send first subtask instructions to a primary available capable agent device to perform at least one physical subtask of the one or more physical subtasks. In some cases, agent devices may be modified or augmented to enable them to contribute to achieving the objective.

## Description

The present technology relates to the operation of intelligent, adaptable, autonomous physical machines using the facilities available in ambient computing environments to discover and assemble potentially cooperable machines and components into new configurations according to a scenario prompt.

As will be clear to one of ordinary skill in the art, this is merely one example of the possibilities in autonomous machine operations, and many other examples will be immediately apparent.

According to a first implementation of the present technology, there is provided a device management engine comprising a transceiver element operable to communicate with machines over a network fabric of an ambient computing environment; and an intelligent machine learning element operable to: responsive to a scenario prompt, define an overall objective comprising one or more physical subtasks; determine available agent devices in the ambient computing environment; determine capabilities of the available agent devices; identify available capable agent devices configurable to perform at least one of the one or more physical subtasks; and send first subtask instructions to a primary available capable agent device to perform at least one physical subtask of the one or more physical subtasks.

According to a second implementation of the present technology, there is provided a method of operating a device management engine comprising: receiving a scenario prompt indicating an objective to be achieved; communicating with machines over a network fabric of an ambient computing environment; and operating an intelligent machine learning element to: responsive to the scenario prompt, define an overall objective comprising one or more physical subtasks; determine available agent devices in the ambient computing environment; determine capabilities of the available agent devices; identify available capable agent devices configurable to perform at least one of the one or more physical subtasks; and send first subtask instructions to a primary available capable agent device to perform at least one physical subtask of the one or more physical subtasks.

In a further implementation, there may be provided a computer program comprising computer program code to, when loaded into a processor of an autonomous machine and executed thereon, cause the processor to perform the method according to an implementation of the present technology. The computer program may be embodied as a non-transitory computer-readable medium comprising computer program instructions to when loaded into a processor and executed thereon, cause the processor to perform the method according to an implementation of the present technology. In a variant, there may be provided a computer program operable to adapt a host processing system to provide an execution environment permitting operation of non-native processor instructions to perform the steps of the method according to an implementation of the present technology.

Implementations of the present technology are diagrammatically illustrated, by way of example, in the accompanying drawings, in which:
Figure 1 schematically shows a simplified block diagram of an environment comprising a device management engine according to an implementation of the present technology;
Figure 2 schematically shows in more detail the environment comprising a device management engine according to an implementation of the present technology;
Figure 3 illustratively shows a flow diagram of a method of operation of a device management engine according to an implementation of the present technology.

In brief, the present technology provides a device management engine that is interoperable over an ambient computing network with other machines and machine components. The device management engine is operable to respond to a physical objective that is set for it by first analysing the capabilities required in a machine to reach that objective. The capabilities in question are typically physical - for example, a machine to be used for transporting a load may require an additional axle to support a heavier than usual load - but may include logical elements, such as machine control programs for computer controlled machines, for example, computer controlled lathes, computer controlled handling devices, and the like. The device management engine may be able to perform the actions required to achieve the objective itself, without modification or additional assistance, or it may not, in which case, the device management engine is further operable to query its environment to locate any cooperable machines or components that are in-range and could be used either to achieve the physical objective or to be adapted to fill a detected capability gap and thereby achieve the objective. In the example, if no machine is found that can bear the load unmodified, the components required to assemble an additional axle are either located in the ambient environment or manufactured ad hoc by, for example 3D printing, and are then assembled into a usable axle assembly and attached to the original machine. The cooperable machines or components may be "smart" machines - such as, for example, peer autonomous, intelligent machines, or they may be simple, single function or multifunction, mechanical objects. The device management engine is operable to control the cooperable machines or components, either by transmission of commands or by direct physical manipulation using at least one physical manipulation component, so as to muster devices and components to reach the stated goal. In one implementation, the device management engine may be located in one of the machines in a fleet of peer and subsidiary machines, or it may be located in a separate system, such as a network attached server system.

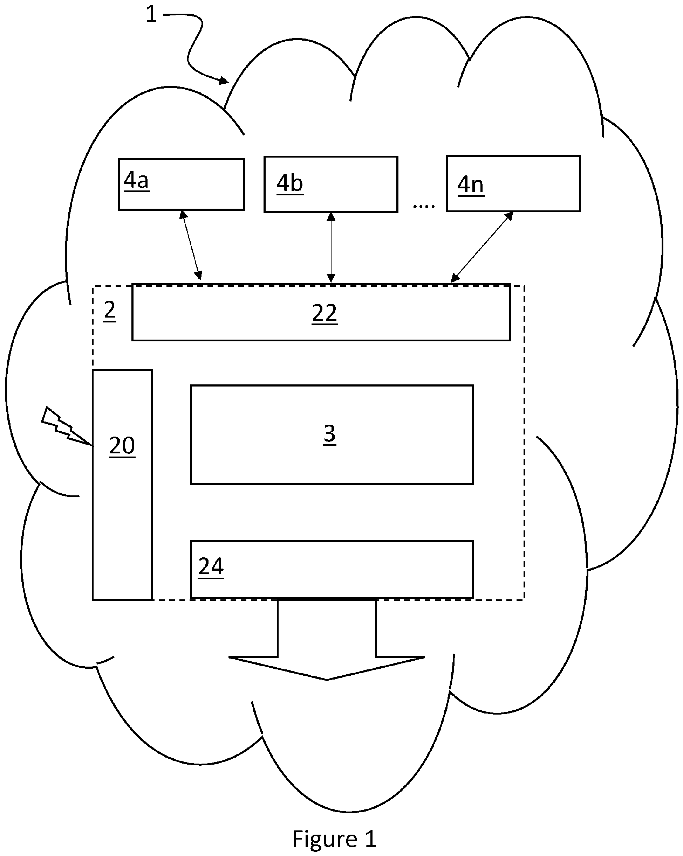

In Figure 1, the ambient environment 1 according to the present technology comprises a machine 2 which is operable to communicate via a communications link with one or more cooperable machines or components 4a - 4n (where 'n' is an integer). Some or all of the cooperable machines or components 4a - 4n may be termed a "fleet" of cooperable machines or components, where the fleet may be controlled by an element of the machine 2 to cooperate either by providing component or subsystem functions themselves or by creating components or subsystems (using, for example, 3D printing) on behalf of the machine 2 to achieve an overall objective. In the description, "communicate" may be used to refer both to electronic signal communications and also to any form of physical communication, such as the application of a pressure or force, attachment of fixing means, and the like.

The machine 2 comprises one or more elements to provide the functionality in accordance with the present techniques. Figure 1 illustratively shows a block diagram of the component elements of a machine 2 according to an implementation of the present technology.

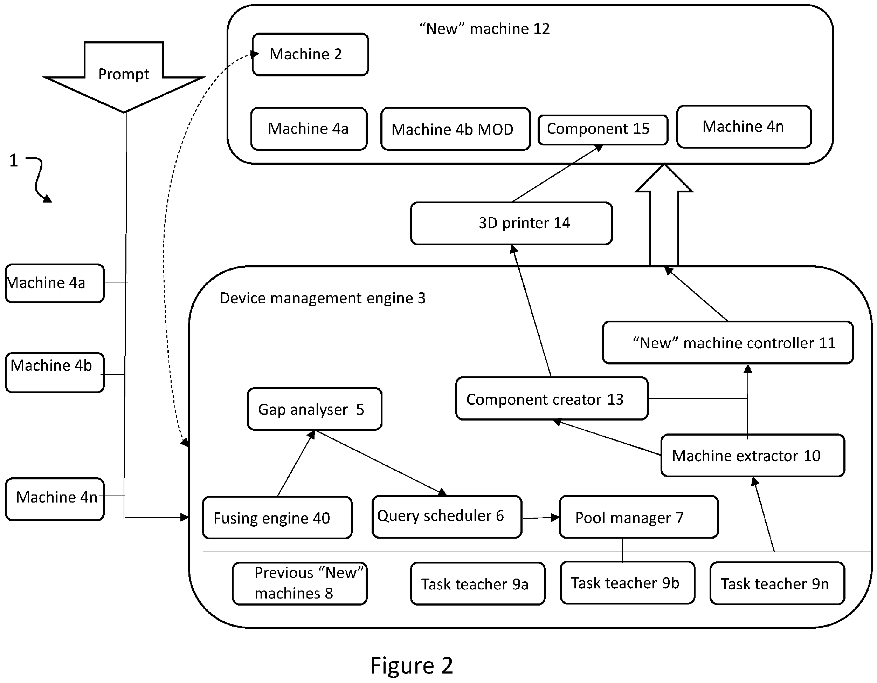

The machine 2 comprises, among other elements, a first communications channel 20 operable to receive at least a prompt signal from some entity in the ambient environment 1 to initiate action. The machine 2 may comprise a second (or further) communications channel 22 for communicating with entities such as cooperable machines or components 4a - 4n in the ambient environment 1. The machine 2 may comprise at least one physical manipulator 24 (for example, a robotic arm manipulator) for manipulating objects in the physical environment. As will be clear to one of skill in the art, a single, multi-function robotic arm may be sufficient to achieve the present technology, but it may also be contemplated that multiple, single-purpose physical manipulators may be used. The machine 2 may also be operable with external tools, such as 3D printers, circuit fabrication tools or the like. The machine 2 also comprises a device management engine 3, which in turn comprises a set of cooperable elements, which elements will be described in more detail with reference to Figure 2 below. At least some of the cooperable elements may comprise elements capable of performing computing functions, in addition to those elements that are capable of performing physical functions.

The computing functions of the one or more elements including any functional elements described herein as a "block," "module" or "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

The device management engine 3 and the one or more secondary intelligent, autonomous machines 4a - 4n may operate responsive to the hardware and/or software elements thereof, where a device may operate using function data (such as instructions, ML models, etc.) to process operational data (e.g. image data, audio data, chemical analysis data) dependent on the particular operation thereof. As will be clear to one of skill in the art, the term "ML models" is here intended to refer to the models used in intelligent model-based learning and inferencing systems. These models may be managed and operated using any of the known forms of intelligent machine learning elements to achieve the technical function of the present technology.

For example, an exemplary data processor device may comprise circuitry including, for example, processing circuitry coupled to storage circuitry, communication circuitry and input/output (I/O) circuitry. The processing circuitry may be provided to carry out instructions of a program by performing the basic arithmetic, logical, control and input/output (I/O) operations specified by the instructions. The storage circuitry may comprise volatile (V) memory (e.g. RAM) and non-volatile (NV) memory (e.g. flash memory or ROM). The storage circuitry may store function data such as the programs executed by the processing element (or the models used for machine learning and inferencing tasks), and operational data used or generated by the cooperable machines or components 4a - 4n and collected or received by the autonomous machine assembly engine may also be stored in the storage circuitry for processing by the processor circuitry.

The term "operational data" is used here to mean any data payload that is taken in as input to be processed for a user, is currently being processed, or that is output in the form of a result. The term is also used to mean any metadata such as control parameters, timing control data, and the like, that may need to be passed to the processing element. The term "operational data" is thus intended to be distinguished from "function data" that comprises the data and metadata that is used for performing subordinate functions on behalf of a higher-level task - for example, machine learning model data for performing model-based machine learning tasks. One example of function data is a classification model for classifying the objects detected in an image into their classes - for example human, animal, vehicle, building - according to the learned characteristics embodied in the classification model by way of a feature extraction process.

The storage circuity may also store one or more machine learning model(s) or neural network(s) (hereafter "model"), where the model is executed on stimuli, such as data generated by the I/O circuitry to generate an output(s). In one example, a neural network comprising a classification neural network (CNN) is executed to analyse image data from camera circuitry to provide an output to determine whether a particular object to be classified is present in the image data. In this example, an element of an image may be individuated (selected as distinguished from background elements by inclusion in, for example, a bounding box) analysed to determine characterising features, and compared with a library of characterising features (derived by a learning process from a corpus of data) to classify the element in the image as belonging to a particular class of entities - a pedestrian, a moving car, a traffic light, a street lamp, etc. In a concrete example, an element of an image received at an imaging device attached to an autonomous machine may be identified as a particular mechanical component by comparison of its characterising features with the features of mechanical components learned from a corpus of images of mechanical components.

The storage circuity may also store credential data. Such credential data may include shared secret(s), for example, a cryptographic key which corresponds to a cryptographic key on a remote resource for authentication/encryption of communications comprising one or more packets of data transmitted therebetween.

Communications links, in the form of communications circuitry, such as a transceiver element, in the one or more cooperable machines or components 4a - 4n enables communication with remote devices, such as machine 2, also provided with communication circuitry. The communication circuitry is operable over electronic communications means, wired and unwired, forming an ambient computing network fabric. The communication circuitry may use wireless communication over one or more channels, such as, for example, wireless local area network (e.g. Wi-Fi), short range communication such as radio frequency identification (RFID), near field communication (NFC), or communications channels used in wireless sensor networks such as ZigBee, Thread, Bluetooth and/or Bluetooth Low energy (BLE). Additionally, or alternatively, the communication circuitry may use a cellular network such as 3G, 4G, 5G etc. The communication circuitry may also use wired communication such a fibre optic or metal cable (e.g. Universal Serial Bus) via a physical data port, whereby a device reads and/or writes data from/to the storage circuitry. The communication circuitry could also use two or more different forms of wireless or wired communication, such as several of the examples given above in combination. Any of these communication means may in this way combine to form an ambient computing environment wherein transceiver elements at the devices register their presence in the environment and in which the network fabric permits the passing of messages among or between devices.

The I/O circuitry may comprise sensing circuitry to sense inputs from the surrounding environment, (e.g. vibrations, temperatures, smells, sounds, chemical analysis (e.g. to detect smells or sounds) and/or to provide an output to a user e.g. using screen or speaker.

The machine 2 and the one or more cooperable machines or components 4a - 4n may each also comprise a power source, which may be a battery (e.g. a lithium coin cell), although any suitable power source may be used (e.g. an AC or DC mains power supply; solar power, wind power etc.).

The machine 2 further comprises at least one device management engine 3, which is operable, when prompted, to control machines and to design and implement enhancements to the capabilities of the existing machines and components in the local ambient environment. The features and functioning of device management engine 3 will be detailed herein below, with especial reference to Figure 2.

It will be appreciated that the machine 2 and the one or more cooperable machines or components 4a - 4n may comprise other hardware/software components not described herein depending on the specific functionality of the devices.

It will also be appreciated that the hardware (e.g. circuitry) and/or the software (OS, applications) of a particular cooperable machine or component 4n may be taken to define the characteristics of that device and, in turn it may be possible to determine the capabilities of a device by determining one or more characteristics thereof. As an illustrative example, a characteristic of the device may include: a software version currently active on the device or active for a component of the device; the class of device or the class of a component(s) thereon; the vendor of the device or a component(s) thereon; the manufacturer of the device or a component(s) thereon; the current geographic location thereof; the security capabilities and/or requirements for the device or a component(s) thereon; the communications capabilities of the device or a component(s) thereof; a schedule specifying when the device (or a component thereon) is active or asleep, the speed of the processor; the size of memory; the degrees of freedom of movement of a physical manipulator arm, and the like. It will be appreciated that the list of characteristics is exemplary only.

In some examples, the circuitry may comprise secure parts where applications may run in a more secure or trusted portion of the circuitry. Such security may be provided by hardware and/or software.

In embodiments, one or more of cooperable machines or components 4a - 4n may be provisioned with function data (e.g. instruction data, parameters, or ML models) to cause them to perform various processing operations and functions. In embodiments, such data may be provisioned by the device management engine 3. Additionally, or alternatively, the cooperable machines or components 4a - 4n may receive, process and send data (e.g. operational data or other requested data, such as control metadata, function data or machine-learning model data) to the device management engine 3.

For a better understanding of the environments within which the present technology may be implemented, Figure 2 shows in more detail than Figure 1, one possible example of ambient environment 1.

In the ambient environment 1, device management engine 3 (shown here in isolation from any other components of the machine 2) is aware, via the ambient environment, of the fleet of cooperable machines or components 4a - 4n.

As described above, a particular cooperable machine or component 4x may be configured to operate purely mechanically, or it may be operable responsive to, for example, the hardware elements (e.g. circuitry thereof) and/or the software elements of a control system (e.g. operating system, firmware, or one or more application software programs) in storage circuitry.

In embodiments, the device management engine 3 receives a scenario prompt instruction or request (hereafter "scenario prompt"). The scenario prompt may be generated by an element within machine 2 or may be issued by, for example, a user via a device in communication with machine 2 . A "scenario prompt" may be envisaged as the means by which a device "becomes aware" of a situation in its various aspects. A scenario may, for example, comprise a geographical element, such as "Device is at location x,y,z in a representation of a building", in combination with instruction data to cause the device to interrogate nearby devices to determine an ambient temperature at the device's location and to activate a machine-learning model trained to detect anomalous building temperature data and to seek out, assemble and operate fire suppression apparatus and physical manipulation equipment found in the environment to suppress the fire and to separate burning materials from flammable materials nearby. The scenario prompt may further comprise learned knowledge, such as, for example, intention analysis based on previous behaviour patterns, direction, location, and rate of travel, gaze analysis, and the like. As will be clear to one of skill in the art, a device management engine 3 may, depending upon the use cases in operation, be in receipt of streams of scenario prompts over the course of a day, and each scenario prompt may cause further action as described hereinbelow.

A scenario prompt may comprise information about the environment in which a machine 2 is located or about another relevant environment within which the scenario prompt requires a machine to take one or more actions. Such an action may be a monitoring action to monitor the environment or a user for some specific indicator, or it may take the form of an immediate trigger for performing an action. As will be clear to one of skill in the art, the scenario prompt may comprise further elements according to the prior training of the machine-learning model and the situations envisaged for processing.

Responsive to the scenario prompt, the device management engine 3 determines one or more objectives based on or in response to the scenario prompt.

As a simple illustrative example, a device management engine 3 is determined to be faced with a heavy load, and the heavy load needs to be moved from a first location to a second location.

In the present illustrative example, the determination that the load is required in the second location may be the scenario prompt, and machine 2 or may have the appropriate tooling (such as a manipulator arm) and the power to move the load without further requirements.

However, in some cases the device management engine 3 may determine that built-in devices immediately and directly available to the device management engine 3 may not be sufficient (in number or in their capabilities) to achieve a particular objective. The present techniques address this gap in available capability to achieve a particular objective.

In ambient scenarios, the device management engine 3 may orchestrate the functionalities of cooperable machines or components it can communicate with, in order to control the functionality of such devices to achieve the objective constructed according to the scenario prompt. To do this, the device management engine 3 determines an objective, determines the available resources (e.g. cooperable machines or components 4a - 4n and respective capabilities thereof) to perform one or more physical subtasks to achieve that objective; and identifies any gaps in the capabilities of the available resources. In the present illustrative embodiments, a cooperable machine or component 4a - 4n used by the device management engine 3 to solve an objective may hereafter be referred to as an "agent device."

If a machine in the fleet of agent devices (including the machine 2 that hosts device management engine 3) is capable of performing the actions to achieve the physical objective set by the scenario prompt without further assistance, the device management engine 3 is operable to instruct it to do so.

If one or more gaps in the available capabilities to solve the objective (hereafter "gap") has been identified, the device management engine 3 determines how any such gap(s) may be addressed, and then assembles and operates a "new" machine to address the gap(s), using the agent device's own resources and the cooperable machines or components 4a - 4n.

The term "new machine" is used here in the special sense of "a new configuration comprising an agent device and any further machines or components that may be attached to it to produce a new configuration capable of achieving the objective".

The machines or components may further be modified to cause them to operate in a way in which they are not presently configured or not designed to operate. Additionally, or alternatively, a group of heterogeneous machines or components may be caused to operate in a coordinated or cooperative manner to achieve the (common) objective.

As described above, in an embodiment shown in Figure 2, the device management engine 3 operates in an ambient environment 1 in which it is in substantial communicative proximity to cooperable machines or components 4a - 4n. The device management engine 3 is operable to receive a prompt as shown in the figure, and comprises elements including: task fusing engine 40, gap analyser 5, query scheduler 6, pool model manager 7, machine extractor 10, component creator 13 and "new" machine controller 11. These resources are operable for their various functions when a process commences, as initiated by the scenario prompt, which may comprise, for example, a "triggering" set of circumstances that are sensed by any appropriate device under control of, or in communication with, the device management engine 3, including, for example a remote control device, an application located in a user device (e.g., a mobile/cellular phone), or a combination of these, possibly in conjunction with other environmental factors.

On obtaining a scenario prompt, which may be derived responsive to the data (e.g. obtained from one or more machines or components (e.g. agent device) in an environment) i.e. where the devices are thus contributing to the objective or context, the task fusing engine 40 may perform a global understanding of the tasks required to meet the objective and the capabilities of devices needed to do so by combining (in an informative way) inputs from the one or more machines or components 4a - 4n that are available.

In this way, an initial "rough" scenario prompt may be refined by the incorporation of knowledge that is only available to the machines or components in the environment, and it is in this way that an autonomous machine assembly engine's initial understanding of the scenario, and thus the required structure of machines and components needed to achieve the overall objective and the overall outcome can be correctly structured.

Such inputs may, for example, be operational data, location data, intention data or the like. The scenario prompt may thus define a complete representation of a situation that may require multiple tasks of information gathering, analysis, machine understanding, and probabilistic outcome determination.

In this way, the device management engine is operable to examine all the available data from the ambient environment to determine all the resources available within useful proximity and to begin the task of mapping the available resources to the requirements of the physical tasks and subtasks required to meet the objective derived from the scenario prompt.

The task fusing engine 40 may thus need to define sub-objectives for a fleet of machines and components with heterogenous capabilities, so that by action of the various machines and components each performing its respective sub-objective(s), the fleet of machines and components together cooperate to perform a global objective.

Device management engine 3 further comprises gap analyser 5, which is operable to identify missing data or insights to infer context, or otherwise to enable the delivery of the required design of the "new" machine 12 to achieve the objective.

The gap analyser 5 does this by, for example, examining first the scenario prompt to determine the ultimate target outcome, and then, second, the sub-objectives to be achieved by the fleet of machines and components, and thus to develop a representation of the entire operation to achieve the outcome in the form of a network of sub-tasks (each to meet a sub-objective). The network of sub-tasks can then be considered in terms of the functionality available across the fleet of machines and components as currently constituted. In a first example case, the fleet of devices has no gaps - that is, each device in the fleet of devices is capable of meeting its sub-objective using the physical or logical facilities that are already installed and operational.

In a second example case, at least one of the fleet of devices is not capable of meeting its sub-objective and cannot be made so by installing additional function - for example, where a device does not have sufficient memory to contain the in-process data, or sufficient processing power to perform the required processing. In this case, it can be eliminated from further consideration at this stage.

In a third example case, at least one device in the fleet of devices is not, as currently configured, capable of meeting its sub-objective, but it may be made so capable by virtue of, for example, being modified or retuned, having additional functions installed, having a suitably adjusted control program installed, or the like extension of functionality. Such an agent device which can be modified or augmented to perform the work may hereafter be referred to as an "adjusted device".

In embodiments, the gap analyser 5 determines which machines or components are available to communicate with. Such a determination may be made by transmitting a broadcast message to cause any nearby intelligent device receiving the broadcast message to respond, and monitoring the responses. In one alternative, the device management engine 3 may use facilities such as a camera to locate machines or components in the vicinity that may be of use in assembling a "new" machine 12 to achieve the objective.

The gap analyser 5 may determine one or more characteristics of the devices that were seen or that responded to the broadcast signal to, in turn, understand what capabilities each machine or component has - for example, a load bearing capacity or an ability to perform fine manipulations of objects, and the like. The characteristics may also include the location of the machine or component (e.g. via location data); manufacturer of the machine or component (e.g. via identifier data (e.g. a UUID)); model or type of device (e.g. via identifier data). The gap analyser 5 may then create a data matrix comprising the characteristics of all available machines or components 4a - 4n.

Query scheduler 6 may be used to query a large AI model, and/or a model zoo or collection to identify one or more key models of designs for mustering or assembling the one or more machines or components 4a - 4n to perform the subtasks that compose the task to meet the overall set objective.

The pool manager 7 manages a stored pool comprising various machine and component design models in the form of previous "new" machines 8 that have been constructed in the past and expert model information in the form of task teachers 9a - 9n. The task teachers may comprise exemplary machine and component designs and sub-assembly instructions for achieving physical subtasks - as will be clear to one of skill in the art, these may be collected from a large corpus of engineering know-how, such as a computer-stored knowledge base.

The pool may also contain large models suitable for achieving overall objectives where sufficient storage and processing resource is available, and may also contain smaller, less resource-hungry models suitable for deployment where the machines and components have more limited capabilities. The models in the pool may further be suitable for modification and customization according to the facilities available at the various devices in the fleet of machines and components. There may thus be provided the means for using existing models to operate to create further models for specific purposes and to add to and improve the pool of machine learning task teachers 9a - 9n by adding previous "new" machine 8 design information, so as to make it available for future retrieval and use.

The machine extractor is operable to select appropriate control data (for example, machine control instructions, constant data sets, data structures and ML models) for any machine or component that is possessed of autonomous control capabilities, according to the functionality determined to be available. The machine extractor is further operable to extract instruction sequences for "new" machine controller 11 and, if necessary, for component creator 13.

In implementations, the creation of a design model may be achieved by an intelligent machine learning element in the device management engine 2, using a machine learning and inferencing method. In implementations, the creation of the design model may comprise, for example, using an existing model from a pool of models, and adapting the existing model to make it compatible with the structure and capabilities of one or more of the machines or components 4a - 4n.

To perform the manipulations required to manage and select the machines and components to form the fleet of devices to be used to perform the physical subtasks that contribute to the overall objective, the device management engine 2 may make use of a matrix encoding neural network capable of encoding and manipulating the matrix-style relationship data found in many combinatorial optimization problems. (e.g. MatNet).

When machine extractor 10 determines that a design model it has derived is suitable to achieve the objective from the original prompt, it passes the information concerning the machines or components that are operable as-is, or which are modifiable to be operable, to the "new" machine controller 11. If there are gaps in the design model that can be filled by the creation of a new component from scratch, the machine extractor 10 is operable to pass the information to component creator 13, which in turn is cooperable with, e.g., 3D printer 14 to create the new component. New machine assembler is then operable to instruct the physical manipulator of a machine in the fleet of devices (including the machine 2 that hosts the device management engine 2) to assemble any machines and components that do not have independent autonomous functions, including both pre-existing "unintelligent" machines and components and components that have been newly created, by, e.g., 3D printing. "New" machine controller 11 is further operable to orchestrate the self-integration of any machines and components that do have independent autonomous functions into the "new" machine 12.

As shown in the figure, "new" machine 12 may thus be constructed from any combination of pre-existing machines, such as machine 2, machine 4a, modified pre-existing machines, such as machine 4b MOD, and components either pre-existing or newly-created by, e.g., 3D printing or circuit fabrication on a substrate.

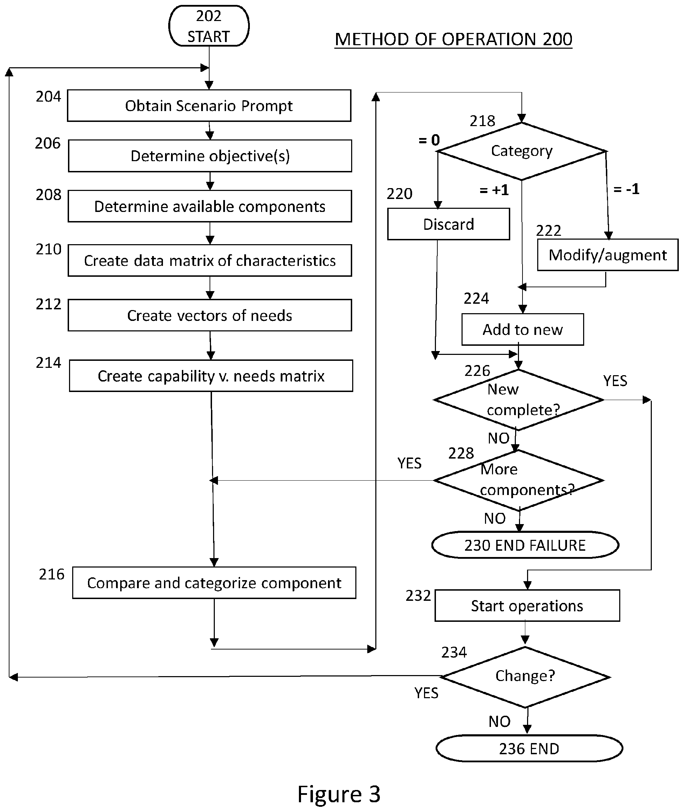

Figure 3 illustratively shows an exemplary method 200 for operating an autonomous machine according to the present technology.

At 202 the method starts.

At 204 the device management engine 3 obtains a scenario prompt, which may be issued by, for example, an active input e.g. from a user via a device in communication with the machine 2 that hosts device management engine 3, or, for example, a passive input (e.g. an indicator of an intention of a user) by way of an automated response to a detected situation.

At 206, responsive to the scenario prompt, the device management engine 3 determines one or more objectives, which may be derived by the application of machine learning and inferencing methods on or in response to the scenario prompt.

At 208, the device management engine 3 determines the available machines and components available to perform the tasks. For example, the device management engine 3 determines which machines and components are available (within a local part of the ambient environment, for example) with which to communicate and at 210 determines the characteristics of such available machines or components, creating a matrix representation of the characteristics.

At 212, the device management engine 3 creates vectors describing one or more needs, which may take the form of physical subtasks required to be performed to achieve the one or more overall objectives.

At 214, the device management engine 3 creates a capability matrix - that is, for each subtask, the capability matrix defines the device/sensor requirements as well as any function capability characteristics (such as a load-bearing maximum weight, a number of degrees of freedom of a joint, the capacity of a control system to implement an ML model, the storage capacity available to store in-process instruction data, and the like).

At 216, a per-machine or component process begins, whereby each device's capabilities are compared against the requirements for performing a proposed physical subtask, and this process is operable to iterate until (a) there is a sufficient fleet of machines or components with the correct specific capabilities available to form a "new" machine 12 that is capable of achieving the objective, or (b) there are no further available machines or components even when modified or augmented with additional componentry, and the subtasks cannot be completed to achieve the objective.

For each machine or component, then, at 216, comparison and categorization are performed, and at 218 the categorization yields a device matrix value. The matrix values are M = +1, M = 0, and M = -1. For machines or components categorized as M = 0, at 220, the machine or component details are discarded from the matrix of possible devices to enter the new design model. For devices categorized as M = +1, the device is added to the new design model at 224.

For devices categorized as M = -1, the autonomous machine assembly engine 3 determines how the one or more resources could be configured by modification or augmentation to operate to achieve the one or more objectives. For example, a machine that runs on wheels may require modification to reduce a tyre pressure to improve adhesion on a poor surface before it can be used to assist in reaching the objective. In another case, a machine may require augmentation by, e.g., provision of an additional reduction (step-down) gearing sub-assembly, which can be produced by, for example, 3D printing.

The device management engine 3 at 222 determines and performs the necessary actions to adjust (modify or augment) the machine or component capabilities to enable it to perform a physical subtask. In some cases, this may involve installing additional physical componentry or software, function data or the like, such that the device can, for example, operate an ML model to complete the subtask. In other cases, the action may involve reconfiguring elements of the device that are already in place in the device's available functions. As an illustrative example, the device management engine may determine that a particular machine or component has pre-existing circuitry (e.g. a microphone) that is not currently enabled but which could be used to achieve a particular objective if it were enabled. The autonomous machine assembly engine 3 may then provide instruction data to cause the machine to enable the circuitry required to achieve the one or more subtasks required for its part in achieving the objective. Thus, the device management engine 3 can address any gaps in the resource capabilities by reconfiguring the one or more machines or components (e.g. responsive to instruction data) to be modified machines or components.

In this manner, when a machine or component that was categorized as M = -1 has been modified or augmented at 222, the machine or component is added to the new design model for "new" machine 12 at 224.

The device management engine may thus determine a primary available, capable agent device to call upon to perform at least a first subtask, and the primary available, capable device itself may call upon one or more subordinate available, capable agent devices to assist in achieving the objective derived from the scenario prompt. In one other implementation, the device management engine may assemble a fleet of agent devices all under its own direct control to perform the subtasks. As will be clear to one of ordinary skill in the art, the device management engine may be resident in a separate machine, such as a cloud or other server, or it may be resident in one of the peer machines that compose the fleet. In the latter case, the device management engine may be equipped to introspect - that is, it may be instrumented to examine its own capabilities as part of the operation of the present technology, and it may thus be capable of operating its own host machine as an agent device, as well as operating other machines with which it is in communication over the network fabric.

At 226, the device management engine 3 tests whether the new design model is complete - that is, are all the machines or components necessary to achieve the subtasks ready to operate or not? If the new design model is complete, the process continues at 232. If the new design model is not complete at 226, and there are more machines or components to be considered at 228, the process iterates from 216 to compare, categorize and further process additional machines or components until the new design model is complete at 226 or no further machines or components are available at 228. In the latter case, that is, there are no more machines or components to be considered and the new design model is incomplete, the process has failed and ends at 230 END FAILURE. As will be clear to one of ordinary skill in the art, END FAILURE may be signaled to a user or processed using any of the known and appropriate failure processing methods.

If the new design model is determined to be complete at 226, the operations to assemble and operate the "new" machine 12 to achieve the objective can begin at 232. The process normally completes at 236 END. As will be immediately clear to one of skill in the art, the device management operation 200 described here represents a single iteration, and in any real world setting, many and varied iterations, with adjustment to particular use cases, may be performed.

As will be clear to one of skill in the art, not all cases are a simple as that defined above. For example, in the case where a scenario prompt is received and the method begins, but the real-world situation changes, it may be necessary to stop the method at any point (e.g. responsive to one or more scenario prompts), and to reset any changes begun at any of the completed steps. In such cases, also, it may be advantageous to retain some advantage from any of the steps that may have completed - for example, if a new or adjusted design model has been created during the process, it may be advantageous not to merely discard it and thus waste the resource consumed in its creation, but to save it to the pool for possible future use. In some cases also, additional information may come to light in the course of processing that may make it useful to stop the method and restart with the benefit of e.g. an improved scenario prompt, or an improved model for deployment. These minor variations are envisaged and allowed for within the implementations of the present technology.

In Figure 3, an example of this situation is shown at test 234, following the start of operations at 232. At 234, if no change is detected, the operations of 232 continue to normal completion of the method 200 at END 236. However, if a change in the environment or the scenario is detected at 234, the method 200 may return to 204, to continue with the changed scenario. This sequence is merely one example, as the scenario may change as shown at 234 at any time during the processing of the method, as and when the environmental factors and the scenario change, and the process needs to be modified accordingly.

Thus, in accordance with the present techniques there is provided an ambient system where, responsive to a scenario prompt, a device management engine can identify machines and components that are available in the ambient environment to determine whether there are machines and components that can immediately and without additional work, perform the necessary subtasks. If, on the other hand, there are no, or insufficient numbers of, machines and components that could perform the work unchanged, the primary intelligent, autonomous machine can determine which machines and components could be adjusted (modified or augmented) to perform the work. It may also be able to perform a cost estimate (the cost being in processing or other resource use) of the work required to adjust any particular device, and can then make a selection of devices to adjust, based on that cost estimate. The device management engine can then generate control data that can be deployed to machines or components to perform the subtasks to achieve a specific objective. Such functionality means that a machine may be operable provide a particular function even when that machine may not have been designed or configured to perform that function.

As will be appreciated by one skilled in the art, at least parts of the present technique may be embodied as a system, method or computer program product. Accordingly, the present technique may take the form of an entirely hardware embodiment, an entirely software embodiment, or an embodiment combining software and hardware. Where the word "component" is used, it will be understood by one of ordinary skill in the art to refer to any portion of any of the above embodiments.

The functions of the various elements shown in the figures, including any functional elements labelled as a "block," "component," "module" or "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

Reference throughout this document to "one embodiment," "certain embodiments," "an embodiment," "implementation(s)," "aspect(s)," or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

The term "or," as used herein, is to be interpreted as an inclusive or meaning any one or any combination. Therefore, "A, B or C" means "any of the following: A; B; C; A and B; A and C; B and C; A, B and C." An exception to this definition will occur only when a combination of elements, functions, steps or acts are in some way inherently mutually exclusive.

As used herein, the term "configured to," when applied to an element, means that the element may be designed or constructed to perform a designated function, or has the required structure to enable it to be reconfigured or adapted to perform that function.

Numerous details have been set forth to provide an understanding of the embodiments described herein. The embodiments may be practiced without these details. In other instances, well-known methods, procedures, and components have not been described in detail to avoid obscuring the embodiments described. The disclosure is not to be considered as limited to the scope of the embodiments described herein.

Furthermore, the present technique may take the form of a computer program product embodied in a non-transitory computer readable medium having computer readable program code embodied thereon. The computer readable medium may be a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object-oriented programming languages and conventional procedural programming languages.

The program code may execute entirely on the user's computer, partly on the user's computer and partly on a remote computer or entirely on the remote computer or server. In the latter scenario, the remote computer may be connected to the user's computer through any type of network. Code components may be embodied as procedures, methods or the like, and may comprise sub-components which may take the form of instructions or sequences of instructions at any of the levels of abstraction, from the direct machine instructions of a native instruction-set to high-level compiled or interpreted language constructs.

It will also be clear to one of skill in the art that all or part of a logical method according to embodiments of the present techniques may suitably be embodied in a logic apparatus comprising logic elements to perform the steps of the method, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored using fixed carrier media.

In one alternative, an embodiment of the present techniques may be realized in the form of a computer implemented method of deploying a service comprising steps of deploying computer program code operable to, when deployed into a computer infrastructure or network and executed thereon, cause said computer system or network to perform all the steps of the method.

In a further alternative, an embodiment of the present technique may be realized in the form of a data carrier having functional data thereon, said functional data comprising functional computer data structures to, when loaded into a computer system or network and operated upon thereby, enable said computer system to perform all the steps of the method.

Those skilled in the art will recognize that the present disclosure has been described by means of examples. The present disclosure could be implemented using hardware component equivalents such as special purpose hardware and/or dedicated processors which are equivalents to the present disclosure as described and claimed.

The techniques further provide processor control code to implement the above-described systems and methods, for example on a general-purpose computer system, on a digital signal processor (DSP), on a graphics processing unit (GPU), on a Neural Processing Unit (NPU), or the like.

The techniques also provide a carrier carrying processor control code to, when running, implement any of the above methods, in particular on a non-transitory data carrier - such as a disk, microprocessor, CD- or DVD-ROM, programmed memory such as read-only memory (firmware), or on a data carrier such as an optical or electrical signal carrier. The code may be provided on a carrier such as a disk, a microprocessor, CD- or DVD-ROM, programmed memory such as non-volatile memory (e.g., Flash) or read-only memory (firmware). Code (and/or data) to implement embodiments of the techniques may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog^{™}, VHDL (Very high speed integrated circuit Hardware Description Language) or SystemVerilog hardware description and hardware verification language. As the skilled person will appreciate, such code and/or data may be distributed between a plurality of coupled components in communication with one another. The techniques may comprise a controller which includes a microprocessor, working memory and program memory coupled to one or more of the components of the system.

The various representative embodiments, which have been described in detail herein, have been presented by way of example and not by way of limitation. It will be understood by those skilled in the art that various changes may be made in the form and details of the described embodiments resulting in equivalent embodiments that remain within the scope of the appended items.

## Claims

1. A device management engine comprising:
a transceiver element operable to communicate with machines over a network fabric of an ambient computing environment; and
an intelligent machine learning element operable to:
responsive to a scenario prompt, define an overall objective comprising one or more physical subtasks;
determine available agent devices in the ambient computing environment;
determine capabilities of the available agent devices;
identify available capable agent devices configurable to perform at least one of the one or more physical subtasks; and
send first subtask instructions to a primary available capable agent device to perform at least one physical subtask of the one or more physical subtasks.

2. The device management engine of claim 1, wherein the device management engine is operable to determine that the primary available capable agent device requires augmentation to perform at least one physical subtask of the one or more physical subtasks.

3. The device management engine of claim 2, wherein the primary available capable agent device requiring augmentation is cooperable with at least one secondary agent device under control of the device management engine to perform at least one physical subtask of the one or more physical subtasks.

4. The device management engine of any preceding claim, wherein the device management engine is operable to control the at least one detected primary available capable agent device by transmitting commands using an electronic connection.

5. The device management engine of claim 3, further operable to instruct the at least one detected primary available capable agent device to augment itself by by direct physical manipulation of the secondary agent device using at least one physical manipulation component.

6. The device management engine of any of claims 2 to 5, further comprising a component creator operable to create a component to augment the primary available capable agent device.

7. The device management engine of claim 6, wherein the component creator is operable to use a 3D printing device.

8. The device management engine of any preceding claim, operable in a server communicating over the network fabric.

9. The device management engine of any preceding claim, wherein the machine learning element is further operable to save for retrieval design information of an adaptation of an existing agent device.

10. A method of operating a device management engine comprising:
receiving a scenario prompt indicating an objective to be achieved;
communicating with machines over a network fabric of an ambient computing environment; and
operating an intelligent machine learning element to:
responsive to the scenario prompt, define an overall objective comprising one or more physical subtasks;
determine available agent devices in the ambient computing environment;
determine capabilities of the available agent devices;
identify available capable agent devices configurable to perform at least one of the one or more physical subtasks; and
send first subtask instructions to a primary available capable agent device to perform at least one physical subtask of the one or more physical subtasks.

11. The method of claim 10, further comprising determining that the primary available capable agent device requires augmentation to perform at least one physical subtask of the one or more physical subtasks.

12. The method of claim 11, wherein the primary available capable agent device requiring augmentation is cooperable with at least one secondary agent device under control of the device management engine to perform at least one physical subtask of the one or more physical subtasks.

13. The method of claim of any of claims 10 to 12, further comprising operating a component creator to create a component to augment the primary available capable agent device.

14. The method of claim of any of claims 10 to 13, further comprising saving for retrieval design information used in adapting an existing agent device.

15. A computer program comprising computer program code to, when loaded into a computer and executed thereon, cause the computer to perform all the steps of the method of any of claims 10 to 14.
